# EUROPÄISCHE PATENTSCHRIFT

(11) **EP 1 190 624 B1**
(45) Veröffentlichungstag und Bekanntmachung des Hinweises auf die Patenterteilung: **28.06.2006**
(21) Anmeldenummer: 01121767.6
(22) Anmeldetag: 19.09.2001
(51) Int. Cl.: A21D 8/04, A21D 13/02

(54) **Verwendung von Transglutaminasen zur Herstellung von Backwaren mit Roggen, Hafer, Mais oder Kartoffel**
Use of transglutaminase for preparing bakery products with rye, oat, mais or potato
Utilisation de transglutaminase pour la préparation de produits de boulangerie avec seigle, avoine, maïs ou pomme de terre

(30) Priorität: 20.09.2000 DE 10046605
(43) Veröffentlichungstag der Anmeldung: 27.03.2002
(73) Patentinhaber: AB Enzymes GmbH, 64293 Darmstadt (DE)
(72) Erfinder: Schuhmann, Frank, 32760 Detmold (DE)
(74) Vertreter: Hiebl, Inge Elisabeth

(56) Entgegenhaltungen:
- EP-A- 0 847 701
- EP-A- 0 938 845
- WO-A-96/22366
- US-A- 5 279 839
- GRAEBER S: "Neue Möglichkeiten zur Beeinflussung der Teigeigenschaften bei Roggen und Triticale" GETREIDE, MEHL UND BROT 54 (3) 160-164 2000 RECHTENSTEINSTR. 5, 70469 STUTTGART, GERMANY, XP001121200

## Beschreibung

Die Erfindung betrifft technologische Verbesserungen bei der Herstellung von weizenarmen Backwaren. Insbesondere betrifft die Erfindung die Verwendung von Transglutaminasen zur Herstellung von Backwaren, bei denen der Mehlanteil einen Weizenanteil von 1-50 Gew.-% umfaßt.

Bei der Herstellung von weizenarmen Broten treten Probleme bei der maschinellen Teigverarbeitung und bezüglich der Gebäckqualität auf. Während in Weizenteigen die Kleberproteine ein zelluläres Kleberproteinnetzwerk ausbilden und so einen den gesamten Teig durchziehenden dünnen Proteinfilm entwickeln, bildet sich im Gegensatz dazu in weizenarmen Teigen kein Klebernetzwerk aus. Dadurch verfügen weizenarme Teige nicht über die Elastizität von Weizenteigen. Insbesondere Roggenteige aber auch Teige aus Spezialmehlen sind kurz, behalten die gegebene Form, sind klebrig und haben plastische Eigenschaften. Dies hat seine Ursache darin, daß sich beim Anteigen von Roggen- bzw. Spezialmehl kein Kleber entwickelt, weil gequollene Pentosane die Ausbildung von Klebersträngen verhindern. Die Pentosane umhüllen im Teig z.B. die hydratisierten Roggenmehlproteinpartikel als dicken Schleim. Ferner wird dieses unterschiedliche Teigverhalten zu Weizenteigen auch durch den höheren Anteil an löslichen Inhaltsstoffen erklärt. Über die Teigbildung z.B. von Roggenmischteigen liegen keine Berichte vor. Bei der Herstellung von Roggenmischbroten ist jedoch der Anteil an Roggenmehl für die Teig- und Gebäckeigenschaften bestimmend. So wird der Teig in der Praxis bereits ab einem Roggenmehlanteil von 20% versäuert. Die Teigeigenschaften von Roggenmischbrotteigen ähneln denjenigen aus reinem Roggenmehl. Die Teige sind ebenfalls stark klebrig und haben eine höhere Teigausbeute als Weizenteige. Dies läßt den Schluß zu, daß sich durch den hohen Anteil an Pentosanen auch bei Roggenmischteigen kein vollständiger Proteinfilm ausbildet. Durch das Fehlen eines solchen Proteinfilms weisen Roggen- und Roggenmischbrote eine geringe Gärstabilität auf. Dies führt zu flachen Broten mit einem mangelhaften Brotvolumen.

Spezialmehle sind Mehle, aus denen sich in der Regel keine backfähigen Teige herstellen lassen. Solche Spezialmehle, die von anderen Getreidearten stammen können, aber auch Leguminosenmehle oder andere Pflanzenmehle sein können, enthalten Proteine, die nicht in der Lage sind, ein durchgehendes Netzwerk zu bilden, da die meisten Proteine löslich sind. Daher muß mit den bei der Herstellung von Roggenbrot auftretenden Problemen gerechnet werden.

Zur Verbesserung der Teigeigenschaften von Roggenteigen und Spezialmehlteigen wurde ein pulverförmiges Amylase- und Pentosanasepräparat (VERON® HE) der Firma Röhm GmbH verwendet. Dieses Produkt kann zur Behandlung von hochammylogrammen Roggenmehlen eingesetzt werden. Jedoch führt dieses Enzympräparat zu weicheren Teigen und deutlich flacheren Broten. Weiterhin wurden Hexose-Oxidase und Glucose-Oxidase zur Herstellung von Roggenmischbroten verwendet (vgl. Poulsen, C.H.; Borch Soe: Strong Effect of Hexose Oxidase on the Stickiness of Mixed Rye/Wheat Sour Dough, Tagung Helsinki 1999-12-08 bis 1999-12-10, Congress: 2nd European Symposium on Enzymes in Grain Processing). Mit diesen Enzymen wurde eine Verringerung der Teigklebrigkeit erreicht. Eine Auswirkung auf die Brotform und die Gärstabilität ist jedoch nicht beschrieben. Ferner reagieren Oxidasen mit den Kohlenhydraten im Mehl und nicht mit den Proteinen. Somit waren die bisherigen Versuche aus dem Stand der Technik, die Teigqualität von weizenarmen Teigen zu verbessern, nicht zufriedenstellend.

EP 0 938 845 beschreibt ein Verfahren zur Herstellung von Brot durch Vermischen von Getreidemehl als Hauptrohstoff, wobei Transglutaminase und Proteinteilhydrolysate zusammen mit anderen Rohmaterialien zugesetzt werden.

Die WO 96/22366 beschreibt die Herstellung von Transglutaminase und Transglutaminasepräparaten durch niedere Pilze der Klasse Oomyceten.

Die Druckschrift Getreide Mehl und Brot 54 (2000) 3, Seiten 160 bis 164 beschreibt neue Möglichkeiten der Beeinflussung der Teigeigenschaften bei Roggen und Triticale.

US 5,279,839 beschreibt eine Mehlzusammensetzung für Hefebackwaren, umfassend Brotmehl und eine wirksame Menge an Transglutaminase zur Erhöhung des Dehnwiderstands von Teigen, die mit dieser Mehlzusammensetzung hergestellt wurden.

Der vorliegenden Erfindung liegt somit die Aufgabe zugrunde, Mittel und Verfahren bereitzustellen, mit denen sich die backtechnologische Qualität von weizenarmen Teigen verbessern läßt. Insbesondere sollen erfindungsgemäß die Dehnbarkeit des Teigs sowie die Gashalteeigenschaften des Teigs verbessert werden. Ferner sollen sich durch das erfindungsgemäße Mittel und Verfahren die Backeigenschaften im Hinblick auf eine maschinelle Teigverarbeitung, insbesondere Verringerung der Klebrigkeit, verbessern lassen. Durch das erfindungsgemäße Mittel und Verfahren soll die Qualität des so erhaltenen Gebäcks insbesondere im Hinblick auf Volumen verbessert werden. Die so erhaltenen Backwaren sollen keine Fehlaromen und keine toxikologisch bedenklichen Eigenschaften besitzen. Ferner sollen das erfindungsgemäße Mittel und das erfindungsgemäße Verfahren vom toxikologischen und vom lebensmittelrechtlichen Standpunkt unbedenklich sein.

Überraschenderweise wurde nun gefunden, daß ein Zusatz von Transglutaminase zu weizenarmen Teigen die Teigeigenschaften und die Gebäckeigenschaften signifikant verbessert. Die Teigklebrigkeit verringert sich, so daß eine sehr gute maschinelle Teigverarbeitung gegeben ist. Durch eine Verbesserung in der Gashaltefähigkeit der Teige wird ein deutlich höheres Brotvolumen erzielt. Auch wird die Gärstabilität der Teiglinge erhöht. Die Endgärzeit kann so um bis zu 20% erhöht werden. Die erhaltenen Backwaren weisen trotzdem eine sehr gute Form auf. Dadurch kann in den Backstuben deutlich flexibler gearbeitet werden.

Die vorliegende Erfindung betrifft somit die Verwendung eines Enzympräparats mit Transglutaminase aktivität zusammen mit ublichen Backhilfsmitteln zur Herstellung von Backwaren, bei denen der Mehlanteil einen Weizenanteil von 1-50 Gew.-% und als Rest ein oder mehrere Nicht-Weizen-Mehl(e) ausgewählt aus Roggenmehl, Hafermehl, Maismehl und Kartoffelmehl umfaßt wobei die Transglutaminase in einer Dosierung von 5 bis 5000 TGU pro 100 kg Mehlverwendet wird und wobei das Enzympräparat zusätzlich eine Pilzxylanase in einer Dosierung von 4000 bis 6000 XylH bzw. eine Bakterienxylanase in einer Dosierung von 600 bis 1000 XylH umfasst, wenn das Nicht-weizen - Mehl Roggenmehl, ist sowie ein Verfahren zur Herstellung entsprechender Backwaren.

Die erfindungsgemäße Wirkung der Transglutaminase war überraschend, da bisher davon ausgegangen wurde, daß Transglutaminasen nur erfolgreich bei Teigen mit einem Weizenmehlanteil von größer als 50% eingesetzt werden können (vgl. EP 0 492 406). Die Wirkung der Transglutaminase in Weizenteigen beruht auf der Bildung neuer Verbindungen zwischen den Aminosäuren Glutamin und Lysin der Mehlproteine. Aufgrund des hohen Anteils an z.B. die Roggenmehlproteinpartikel schleimartig umhüllenden Pentosanen oder löslichen Proteinen in Spezialmehlen war es überraschend und nicht naheliegend, daß Transglutaminase bei weizenarmen Teigen derart vorteilhafte Wirkungen zeigt.

Die erfindungsgemäßen Teige enthalten einen Weizenanteil von 1-50%, bevorzugt 5-50%, bevorzugter 10-50% und noch bevorzugter 30-50%, wobei sich die Prozentangaben auf Gew.-%, bezogen auf den Mehlanteil des Teiges als 100% beziehen. Für diesen Weizenanteil können beliebige Weizenarten bzw. -sorten eingesetzt werden, z.B. Dinkel, Durumweizen oder allergenarmer Weizen. Das Nicht-weizen-Mehl ist ausgewählt aus Roggenmehl, Hafermehl, Maismehl und Kartoffelmehl.

Diese Spezialmehle können einzeln oder in Kombination eingesetzt werden. Bevorzugt ist das Nicht-Weizen-Mehl Roggenmehl. Kombinationen an Nicht-Weizen-Mehlen, die eingesetzt werden können, sind beispielsweise Roggen/Kartoffelstärke. Der Anteil an Nicht-Weizen-Mehlen beträgt 50-99 Gew.-%, bevorzugt 50-95 Gew.-%, bevorzugter 50-90 Gew.-%, noch bevorzugter 50-70 Gew.-%, jeweils bezogen auf den Mehlanteil als 100%. Des weiteren kann der Teig die für die herzustellenden Backwaren üblichen Zutaten und Gewürze enthalten. Die Teige werden in an sich bekannter Weise zu den beabsichtigten Backwaren weiterverarbeitet. Die Backwaren können auch gefüllt sein.

Die Dosierung der Transglutaminase richtet sich im Einzelfall nach der Beschaffenheit des Mehls. Enzymdosagen sind zwischen 5 TGU und 5000 TGU, bevorzugt zwischen 10 TGU und 5000 TGU, bevorzugter 10-2000 TGU, noch bevorzugter 30 bis 300 TGU pro 100 kg Mehl in Abhängigkeit von den Mehlkomponenten und der Teigführung.

So beträgt die Dosierung z.B. bei 50% Roggenmehlanteil 70-100 TGU je 100 kg Mehl, bei 60% Roggenmehlanteil 90-150 TGU je 100 kg Mehl, bei 70% Roggenmehlanteil 120-200 TGU je 100 kg Mehl und bei 80% Roggenmehlanteil 200-300 TGU je 100 kg Mehl. Bei den Spezialmehlen liegt der Dosierungsbereich zwischen 100 TGU und 5000 TGU, jeweils bezogen auf 100 kg Mehl, bevorzugter zwischen 300 TGU und 600 TGU in Abhängigkeit von der verwendeten Mehlart. Die genaue Dosierung kann von einem Fachmann anhand einfacher Routineversuche in Abhängigkeit vom jeweils verwendeten Mehl bzw. der Mehlmischung leicht ermittelt werden.

Das Enzympräparat mit Transglutaminaseaktivität kann alleine oder zusammen mit anderen Teigzutaten in einer der Bearbeitungsstufen ab dem Vermahlen des Mehls (Vermahlen des Mehls getrennt nach Mehlsorten oder gemeinsames Vermahlen aller Mehlsorten) bis zur Teigverarbeitung zugegeben werden. Die Zugabe des Enzympräparates kann auch im Sauerteig erfolgen. Bevorzugt wird das Enzympräparat bei Zugabe des Backmittels zugesetzt. Ferner kann die Transglutaminase auch Backhilfsmitteln für entsprechende Teige zugesetzt werden. Zusätzlich kann der Teig noch weitere übliche Backhilfsmittel enthalten, wie beispielsweise Enzyme, z.B. Amylasen, Xylanasen, Pentosanasen, Hemicellulasen, Cellulasen, Endoglucanasen, β-Glucanasen, Phospholipasen, Lysophospholipasen, Phytasen, Phosphatasen, Lipasen, Lipoxygenasen, Oxidasen oder Peroxidasen. Weiterhin können noch andere auf dem Gebiet der Backhilfsmittel übliche Hilfs- und Zusatzstoffe, z.B. Quellmehle, Salz, Zucker, Emulgatoren, organische Säuren, wie z.B. Milch- und Essigsäure, Citronensäure, Weinsäure, Vitamin C, usw. zugesetzt werden.

Erfindungsgemäß gibt es bei der Vorbereitung der Mehlmischung keine spezielle Reihenfolge für die Zugabe der Zutaten (Weizenmehl, Transglutaminase, Nicht-Weizenmehl). Die Zugabe kann in jeder beliebigen Reihenfolge stattfinden, z.B. Mischen der Transglutaminase mit dem Weizenmehl vor der Zugabe des Nicht-Weizenmehls, Mischen der Transglutaminase mit dem Nicht-Weizenmehl vor der Zugabe des Weizenmehls, Mischen der beiden Mehlsorten vor Zugabe der Transglutaminase oder Zugabe aller drei Zutaten zur gleichen Zeit und anschließendes Mischen.

Die erfindungsgemäß verwendeten Transglutaminasen werden bevorzugt durch Mikroorganismenkulturen gebildet, z.B. durch Schimmelpilze oder Bakterien. Das Enzym kann auch pflanzlicher oder tierischer Herkunft sein. Es können auch rekombinant hergestellte Transglutaminasen verwendet werden.

Roggenmischteige können sowohl in direkter als auch in indirekter Führung hergestellt werden. Bei der direkten Führung werden organische Säuren, wie z.B. Milchsäure, Essigsäure oder Citronensäure, und/oder getrockneter Sauerteig zugesetzt. Bei der indirekten Führung wird als Vorteig ein Frischsauerteig eingesetzt. Die Teige können auch zusätzlich noch Hefe enthalten. Es kann auch eine kombinierte Führung verwendet werden.

Die Ergebnisse der Backversuche zeigen, daß die Transglutaminase keinen Einfluß auf reine Roggenteige ausübt (vgl. Tabelle 1 in Vergleichsbeispiel 1). Weder Veränderungen bei den Teigen noch bei den Broten werden ersichtlich. Bei Versuchen mit einem Roggenmehlanteil von 70% zeigen sich deutliche Verbesserungen der Teig- und Gebäckeigenschaften, dabei spielt der Ausmahlungsgrad des verwendeten Roggenmehls keine Rolle (Tabellen 2 und 3). Bereits bei einer Enzymdosage von 200 TGU je 100 kg Mehl wird eine Volumenerhöhung von sehr guten 6 Vol.-% erreicht.

Versuche mit unterschiedlichen Roggenmehlanteilen zeigen, daß das Brotvolumen durch einen Transglutaminasezusatz bei allen Versuchen deutlich zunimmt (Tabelle 4). Es können Volumenzuwächse von bis zu 7 Vol.-% erreicht werden. Die Brotform und Teigstabilität wird selbst bei einem Roggenmehlanteil von 80% noch verbessert. Die Transglutaminase bewirkt eine starke Reduzierung der Teigklebrigkeit. Die besten Ergebnisse werden mit einem Roggenmehlanteil von 60 bis 70% erreicht.

Ferner wurden auch Versuche mit beiden Teigführungen durchgeführt (Tabelle 5 und 6). In beiden Fällen wurde eine sehr deutliche Wirkung der Transglutaminase auf die Teig- und Gebäckeigenschaften festgestellt.

Versuche zur Auswirkung der Transglutaminase auf die Gärstabilität sind in Tabelle 7 dargestellt. Anhand der Ergebnisse wird ersichtlich, daß die Wirkung der Transglutaminase eine Verlängerung der Gärzeit auf bis zu 20% erlaubt. Während ohne Transglutaminase die Brote flach sind und als nicht mehr akzeptabel zu beurteilen waren, weisen die Brote mit Transglutaminase eine äußerst ansprechende Brotform und ein hohes Brotvolumen auf.

Kombinationen der Transglutaminase mit einigen anderen typischen Backenzymen sind in Tabelle 8 bis 10 beschrieben. Die Kombination der Transglutaminasen mit anderen Enzymen hat den Vorteil, daß zusätzlich zur Brotvolumenerhöhung, besseren Brotform, Erhöhung der Teigstabilität und Verbesserung der Gärstabilität auch noch das Porenbild der Krume verbessert wird.

Es wurden ferner Backversuche mit den genannten Spezialmehlen durchgeführt (siehe Tabellen 11 und 12). Die Ergebnisse ähneln denen mit Roggenmischbroten. Auch hier ergeben sich Brote mit einer äußerst ansprechenden Form und einem hohen Volumen. Ebenfalls werden Verbesserungen bei den Teigen festgestellt. Die Teige lassen sich besser verarbeiten, da sie weniger feucht und besser dehnbar sind.

Die Transglutaminasaktivität eines Enzympräparates kann durch den colorimetrischen Hydroxamattest mit Hydroxylamin als Substrat bestimmt werden. Dabei ist 1 TGU/g definiert als die Enzymmenge, die 1 µmol Hydroxyaminsäure pro Minute unter standardisierten Bedingungen freisetzt, bei 37°C und pH 6,0 mit 0,2 M Tris-HCl-Puffer.

Eine Einheit Cellulaseaktivität (CU) ist definiert als die Enzymaktivität, welche die Viskosität im Reaktionsansatz mit einer Standard-CMC-Lösung im vorgegebenen Meßbereich und unter den angegebenen Reaktionsbedingungen (30°C, pH = 4,5, t = 11 min und Volumenströme der Reaktionslösungen) um Δ1*η⁻¹ = 45,11*10⁻⁶ senkt.

Δ1*η⁻¹ ist die Differenz des Kehrwertes der Viskosität einer Standard-CMC-Lösung nach Enzymeinwirkung zum Kehrwert der Viskosität der unbehandelten CMC-Lösung.

### Einheit der Aktivitätskonzentration: CU mg⁻¹

Die durch enzymatische Spaltung von Xylan freigesetzten Xylanbruchstücke werden photometrisch bei 412 nm mit p-Hydroxybenzoesäurehydrazid (PAHBAH) bestimmt. 1 XylH-Unit entspricht der Enzymmenge die 1 µmol Reaktionsäquivalent Xylose durch Spaltung von Xylan in einer Minute bei 30°C unter Standardbedingungen freisetzt.

Die Erfindung wird nun anhand der folgenden Beispiele näher erläutert.

Dabei wurde das Brotvolumen bzw. Backvolumen in üblicher Weise mittels der Verdrängung von Rapssaat gemessen und ist in ml angegeben. Es wurden übliche Kriterien zur Teigbeurteilung verwendet. Die Teigstabilität wird mit den folgenden Kriterien ausgedrückt: trocken, zu fest, fest, etwas fest, minimal fest, normal, minimal weich, etwas weich, zu weich, fließend, feucht. Die Teigklebrigkeit wurde in den Kategorien stark klebrig, klebrig, etwas klebrig, minimal klebrig beurteilt.

Als Beurteilungskriterien der Brotform wurden die Eigenschaften flach, etwas flach, minimal flach, normal, minimal rund, etwas rund und rund verwendet.

Alle roggenmehlhaltigen Brote wurden als freigeschobene Brote hergestellt. In allen Versuchen wurden die folgenden Bedingungen verwendet:
Teigruhe: 20 min
Teigeinlage: 850 g
Endgare: 35 min
Knetzeiten: 5 min langsam und 1 min schnell Gärraumbedingungen: 32°C, 85% Luftfeuchte
Ofentemperatur: 260°C abfallend
TG = Transglutaminase

### Vergleichsbeispiel 1

### Wirkung von Transglutaminase auf reine Roggenteige

Es wurde aus einem Teig mit der folgenden Rezeptur Brot gebacken:

Roggenbrot:

| | |
|---|---|
| 100 kg | Roggenmehl Typ 997 |
| 79 kg | Wasser |
| 3 kg | Hefe |
| 2,5 kg | Salz |
| 2,5 kg | organische Säuren |

Die Ergebnisse sind in der folgenden Tabelle 1 dargestellt. Die angegebenen Enzymdosagen beziehen sich auf 100 kg Mehl; als Teigsäuerungsmittel wurden organische Säuren verwendet. Das Brotvolumen (%) bezieht sich auf das Brotvolumen (ml) des Blindversuches.

**Tabelle 1**

| | **Blindversuch** | **TG** | **TG** | **TG** | **TG** |
|---|---|---|---|---|---|
| | **0 TGU** | **500 TGU** | **1000 TGU** | **1500 TGU** | **2000 TGU** |
| Backvolumen | 100% | 99% | 100% | 101% | 100% |
| Teigeigenschaften | weich klebrig plastisch | weich klebrig plastisch | weich klebrig plastisch | weich klebrig plastisch | weich klebrig plastisch |
| Brotform | etwas flach | etwas flach | etwas flach | etwas flach | etwas flach |

Die vorstehenden Ergebnisse zeigen, daß Transglutaminase keine Wirkung bei reinen Roggenteigen zeigt.

### Beispiel 1 (Vergleichsbeispiel)

### Vergleich der Wirkung von Transglutaminase auf Roggenmischmehle verschiedenen Ausmahlungsgrads.

Es wurde ein Brot aus einem Teig der folgenden Rezeptur hergestellt:

**Roggenmischbrot 70:30**

| | |
|---|---|
| 70 kg | Roggenmehl Typ 997 bzw. Typ 1150 |
| 30 kg | Weizenmehl Typ 550 |
| 73 kg | Wasser |
| 3 kg | Hefe |
| 2,5 kg | Salz |
| 2,5 kg | organische Säuren |

Es wurde ein Roggenmischbrot aus 70% Roggenmehl und 30% Weizenmehl hergestellt. Die Enzymdosagen beziehen sich auf 100 kg Mehl. Gesäuert wurde mit organischen Säuren. Das Brotvolumen (%) bezieht sich auf das Brotvolumen (ml) des Blindversuchs.

Die Ergebnisse sind in den nachstehenden Tabellen 2 und 3 dargestellt.

**Tabelle 2 Roggenmehl Typ 997**

| | **Blindversuch** | **TG** | **TG** | **TG** | **TG** |
|---|---|---|---|---|---|
| | **0 TGU** | **50 TGU** | **100 TGU** | **200 TGU** | **300 TGU** |
| Backvolumen | 100% | 102% | 103% | 106% | 106% |
| Teigeigenschaften | etwas weich, klebrig | etwas weich, etwas klebrig | etwas weich, etwas klebrig | etwas bis minimal weich, etwas bis minimal klebrig | minimal weich, minimal klebrig |
| Brotform | etwas flach | normal | normal | normalmin. rund | min. rund |

**Tabelle 3 Roggenmehl Typ 1150**

| | **Blindversuch** | **TG** | **TG** | **TG** | **TG** |
|---|---|---|---|---|---|
| | **0 TGU** | **50 TGU** | **100 TGU** | **200 TGU** | **300 TGU** |
| Backvolumen | 100% | 101% | 103% | 105% | 106% |
| Teigeigenschaften | weichetwas weich, klebrig | etwas weich, etwas klebrig | etwas weich, etwas klebrig | etwasminimal weich, etwasminimal klebrig | minimal weich, minmal klebrig |
| Brotform | etwas flach | normal | normal | normalmin. rund | min. rund |

Die vorstehenden Ergebnisse zeigen, daß der Ausmahlungsgrad des verwendeten Roggenmehls von untergeordneter Bedeutung ist.

### Beispiel 2 (Vergleichsbeispiel)

### Wirkung von Transglutaminase bei variierenden Roggenmehlanteilen

Aus den folgenden Teigen mit variierenden Roggenmehlanteilen (Typ 1150) wurde Brot gebacken. Es wurden 300 TGU je 100 kg Mehl dosiert.

| Roggenmischbrot 70:30 | | Roggenmischbrot 80:20 | |
|---|---|---|---|
| 70 kg | Roggenmehl Typ 1150 | 80 kg | Roggenmehl Typ 1150 |
| 30 kg | Weizenmehl Typ 550 | 20 kg | Weizenmehl Typ 550 |
| 73 kg | Wasser | 76 kg | Wasser |
| 3 kg | Hefe | 3 kg | Hefe |
| 2,5 kg | Salz | 2, 5 kg | Salz |
| 2,5 kg | organische Säuren | 2,5 kg | organische Säuren |

| Roggenmischbrot 60:40 | | Rogenmischbrot 50:50 | |
|---|---|---|---|
| 60 kg | Roggenmehl Typ 1150 | 50 kg | Roggenmehl Typ 1150 |
| 40 kg | Weizenmehl Typ 550 | 50 kg | Weizenmehl Typ 550 |
| 71 kg | Wasser | 70 kg | Wasser |
| 3 kg | Hefe | 3 kg | Hefe |
| 2,5 kg | Salz | 2,5 kg | Salz |
| 2,5 kg | organische Säuren | 2,5 kg | organische Säuren |

Die Ergebnisse des Backversuchs sind in der nachstehenden Tabelle 4 dargestellt. Die angegebenen Mehlverhältnisse bezeichnen das Verhältnis Roggenmehl zu Weizenmehl.

**Tabelle 4**

| | **Blindversuch ohne TG** | **TG** | **Blindwert ohne TG ohne TG** | **TG** |
|---|---|---|---|---|
| **Mehlverhältnis** | **80/20** | **80/20** | **70/30** | **70/30** |
| Backvolumen | 100% | 104% | 100% | 105% |
| Teigeigenschaften | weich, klebrig | etwas weich, etwas klebrig | etwas weich, klebrig | minimal weich, minimal klebrig |
| Brotform | etw. flachflach | normalmin. rund | etwas flach | minimal rund |
| | | | | |

| | **Blindversuch ohne TG** | **TG** | **Blindwert ohne TG** | **TG** |
|---|---|---|---|---|
| **Mehlverhältnis** | **60/40** | **60/40** | **50/50** | **50/50** |
| Backvolumen | 100% | 107% | 100% | 107% |
| Teigeigenschaften | etwas weich, etwas klebrig | minimal weich, minimal klebrig | etwas-min. weich, minimal klebrig | normal |
| Brotform | etw. flach | etw. rund | normal | rund |

Die vorstehenden Ergebnisse zeigen, daß Brotform und Teigstabilität selbst bei einem Roggenmehlanteil von 80% noch verbessert werden.

### Beispiel 3 (Vergleichsbeispiel)

### Wirkung von Transglutaminase auf Roggenmischteige mit direkter und indirekter Führung

Es wurden aus Teigen mit den folgenden Rezepturen Brote gebakken.

**Roggenmischbrote 70:30 indirekte Führung**

| | |
|---|---|
| 70 kg | Roggenmehl Typ 1150 |
| 30 kg | Weizenmehl Typ 550 |
| 71 kg | Wasser |
| 3 kg | Hefe |
| 2, 5 kg | Salz |
| 50 kg | des Roggenmehls wurden versäuert |

**Sauerteig:**

| | |
|---|---|
| 100 kg | Roggenmehl Typ 1150 |
| 80 kg | Wasser |
| 1 kg | Reinzuchtsauer |
| Teigtemperatur 32°C | |
| Reifezeit: 18 h bei Raumtemperatur | |

Die Ergebnisse des Backversuchs sind in den nachstehenden Tabellen 5 und 6 dargestellt.

**Tabelle 5 direkte Führung, organische Säuren**

| | **Blindversuch** | **TG** | **TG** | **TG** |
|---|---|---|---|---|
| | **0 TGU** | **300 TGU** | **500 TGU** | **1000 TGU** |
| Backvolumen | 100% | 104% | 106% | 102% |
| Teigeigenschaften | etwas weich, etwas klebrig | normal, gut verarbeitbar | normal, gut verarbeitbar | minimal trocken, etwas zäh |
| Brotform | etwas flach | normalmin. rund | etwas rund | zu rund |
| | | | | |

| | **TG** | **TG** | **TG** | |
|---|---|---|---|---|
| | **1200 TGU** | **1600 TGU** | **2000 TGU** | |
| Backvolumen | 100% | 99% | 100% | |
| Teigeigenschaften | trocken, kurz, Teige reißen bei Verarbeitung | trocken, kurz, Teige reißen bei Verarbeitung | trocken, kurz, Teige reißen bei Verarbeitung | |
| Brotform | viel zu rund | viel zu rund, Kruste gerissen | viel zu rund, Kruste gerissen | |

**Tabelle 6 Sauerteigführung, Detmolder Einstufensauer**

| | **Blindversuch** | **TG** | **TG** | **TG** |
|---|---|---|---|---|
| | **0 TGU** | **300 TGU** | **500 TGU** | **1000 TGU** |
| Backvolumen | 100% | 101% | 100% | 103% |
| Teigeigenschaften | etwas weich, etwas klebrig | etw. weich, etwas klebrig, nicht schmierig | minimal weich, minimal klebrig | minimal weich, minimal klebrig |
| Brotform | etwas flach | etwas flach | minimal flach | min. flachnormal |
| | | | | |

| | **TG** | **TG** | **TG** | |
|---|---|---|---|---|
| | **1200 TGU** | **1600 TGU** | **2000 TGU** | |
| Backvolumen | 104% | 105% | 105% | |
| Teigeigenschaften | minimal weich-normal | normal, gut verarbeitbar | normal, gut verarbeitbar | |
| Brotform | minimal flach-normal | normal | normaletwas rund | |

Die vorstehenden Ergebnisse zeigen, daß sowohl bei direkter als auch indirekter Teigführung sich Verbesserungen in den Teig- und Gebäckeigenschaften erzielen lassen.

### Beispiel 5 (Vergleichsbeispiel)

### Wirkung der Transglutaminase auf die Gärstabilität

Mit einem Teig der Rezeptur gemäß Beispiel 3 wurde ein Backversuch bei Gärzeiten von 35 min. (+ 10% Gärzeit) bzw. 45 min. (+ 20% Gärzeit) durchgeführt.

Die Ergebnisse sind in Tabelle 7 angegeben.

**Tabelle 7**

| | **Blindversuch** | **TG** | **TG** | **TG** |
|---|---|---|---|---|
| | **0 TGU** | **100 TGU** | **200 TGU** | **300 TGU** |
| Brotform | | | | |
| Normalgare | etwas flach | normal | minimal rund | min. rundetwas rund |
| Plus 10% Gärzeit | flach | minimal flach | normal | minimal rund-normal |
| Plus 20% Gärzeit | flach | minimal flach | normal-min. flach | normal |

Aus den Ergebnissen geht hervor, daß die Verwendung von Transglutaminase eine Verlängerung der Gärzeit bis zu 20% erlaubt. Ohne Transglutaminase wurden flache, nicht mehr akzeptable Brote erreicht, während bei Zusatz von Transglutaminase eine ansprechende Brotform erhalten wurde.

### Beispiel 6

### Wirkung der Transglutaminase in Kombination mit weiteren Backenzymen

Es wurden Backversuche unter Verwendung von Transglutaminase in Kombination mit Pilzxylanase (P-Xylanase) bzw. Bakterienxylanase (B-Xylanase) durchgeführt. Die Enzymdosagen beziehen sich auf 100 kg Mehl. Die Versuche wurden jeweils mit 70% Roggenmehl Typ 997 (vgl. Beispiel 1) durchgeführt. Es wurde mit organischen Säuren angesäuert. Zum Vergleich wurden auch Versuche mit der reinen Pilz- bzw. Bakterienxylanase durchgeführt. Die Ergebnisse sind in den nachstehenden Tabellen 8 und 9 dargestellt.

**Tabelle 8**

| | **Blindversuch** | **200 TGU + 6000 XylH P-Xylanase** | **200 TGU + 5000 XylH P-Xylanase** | **200 TGU + 4000 XylH P-Xylanase** |
|---|---|---|---|---|
| Backvolumen | 100% | 119% | 116% | 115% |
| Teigeigenschaften | etwas weich, etwas klebrig | min. weich, minimal klebrig | normal | normal |
| Brotform | etwas flach | normal | normalmin. rund | etwas rund |
| | | | | |

| | | **6000 XylH P-Xylanase** | **5000 XylH P-Xylanase** | **4000 XylH P-Xylanase** |
|---|---|---|---|---|
| Backvolumen | | 120% | 116% | 116% |
| Teigeigenschaften | | weich, etw. klebrig, feucht | etw. weich, minimal klebrig | etw. weich |
| Brotform | | flach | etw. flach | etwas flach-min. flach |

**Tabelle 9**

| | **Blindversuch** | **200 TGU + 600 XylH B-Xylanase** | **200 TGU + 800 XylH B-Xylanase** | **200 TGU + 1000 XylH B-Xylanase** |
|---|---|---|---|---|
| Backvolumen | 100% | 116% | 119% | 121% |
| Teigeigenschaften | etwas weich, etwas klebrig | normal | normal-min. weich, min. klebrig | minimal weich, minimal klebrig |
| Brotform | etwas flach | etwas rund | normaletwas rund | normal |
| | | | | |

| | | **600 XylH B-Xylanase** | **800 XylH B-Xylanase** | **1000 XylH B-Xylanase** |
|---|---|---|---|---|
| Backvolumen | | 120% | 116% | 116% |
| Teigeigenschaften | | min. weich, etwas klebrig | etw. weich, etwas klebrig | weich |
| Brotform | | flach | etw. flach | etwas flach-min. flach |

Es zeigt sich, daß die Verwendung von Transglutaminasen zu überlegenen Teigeigenschaften und einer verbesserten Brotform führt, verglichen mit der alleinigen Verwendung einer Xylanase.

Der gleiche Versuch wurde wiederholt, jedoch unter Zugabe einer Pilzcellulase aus *Trichoderma ssp.* Die Enzymdosagen sind auf 100 kg Mehl bezogen. Die Ergebnisse sind in der nachfolgenden Tabelle 10 angegeben.

**Tabelle 10**

| | **Blindversuch** | **200 TGU + 19*10**^{**6**} **CU Pilzcellulase** | **200 TGU + 38*10**^{**6**} **CU Pilzcellulase** | **200 TGU + 77*10**^{**6**} **CU Pilzcellulase** |
|---|---|---|---|---|
| Backvolumen | 100% | 109% | 111% | 112% |
| Teigeigenschaften | etwas weich, etwas klebrig | normal | normal | normal |
| Brotform | etwas flach | normal-etwas rund | normal-min. rund | normal-min. rund |
| | | | | |
| | | | | |

| | | **19*10**^{**6**} **CU Pilzcellulase** | **38*10**^{**6**} **CU Pilzcellulase** | **77*10**^{**6**} **CU Pilzcellulase** |
|---|---|---|---|---|
| Backvolumen | | 103% | 104% | 104% |
| Teigeigenschaften | | min. weich, min. klebrig, | min. weich, min. klebrig | min. weich, min. klebrig |
| Brotform | | min. flach | min. flach | min. flach |

Die Zugabe von Transglutaminase führt zu überlegenen Teigeigenschaften und einer besseren Brotform, verglichen mit der Verwendung von Pilzcellulase allein.

### Beispiel 7

### Backversuche mit Spezialmehlen unter Zusatz von Transglutaminase

Es wurden Backversuche mit Spezialmehlen durchgeführt. Eingesetzt wurden Mischungen aus 50 bzw. 60% Maismehl bzw. 50/60% Hafermehl mit Weizenmehl. Die Dosierung der Transglutaminase bezieht sich jeweils auf 100 kg Mehl. Die Ergebnisse sind in den folgenden Tabellen 11 und 12 dargestellt.

**Tabelle 11**

| | Maismehl 50% Weizenmehl 50% | Maismehl 60% Weizenmehl 40% | Maismehl 50% Weizenmehl 50% | Maismehl 60% Weizenmehl 40% |
|---|---|---|---|---|
| Enzymdosage | 0 TGU | 0 TGU | 300 TGU | 300 TGU |
| Backvolumen | 100% | 100% | 104% | 103% |
| Teigeigenschaften | weich, klebrig | zu weich, klebrig | etw.-min. weich, etw. klebrig | etw. weich, etw. klebrig |
| Brotform | flach | flach | etw. flach | etw. flach |
| | | | | |
| | | | | |

| | Maismehl 50% Weizenmehl 50% | Maismehl 60% Weizenmehl 40% | Maismehl 50% Weizenmehl 50% | Maismehl 60% Weizenmehl 40% |
|---|---|---|---|---|
| Enzymdosage | | | 600 TG | 600 TG |
| Backvolumen | 100% | 100% | 105% | 105% |
| Teigeigenschaften | weich, klebrig | zu weich, klebrig | min. weich, etw. klebrig | etw.-min. weich, etw. klebrig |
| Brotformen | flach | flach | min. flach | etw. flach |

**Tabelle 12**

| | Hafermehl 50% Weizenmehl 50% | Hafermehl 60% Weizenmehl 40% | Hafermehl 50% Weizenmehl 50% | Hafermehl 60% Weizenmehl 40% |
|---|---|---|---|---|
| Enzymdosage | | | 300 TG | 300 TG |
| Backvolumen | 100% | 100% | 102% | 102% |
| Teigeigenschaften | weich, klebrig | zu weich, klebrig fließend | etw. weich, etw. klebrig | etw. weich, etw. klebrig |
| Brotform | flach | flach | etw. flach | etw. flach |
| | | | | |
| Enzymdosage | | | 600 TG | 600 TG |
| Backvolumen | 100% | 100% | 105% | 105% |
| Teigeigenschaften | weich, klebrig | zu weich, klebrig, fließend | min. weich, etw. klebrig | etw.-min. weich, etw. klebrig |
| Brotform | flach | flach | min. flach | etw. flach |

Es ist ersichtlich, dass die Zugabe von Transglutaminase die Teigeigenschaften und die Brotform signifikant verbessert.

### Beispiel 8

Es wurden Brote aus drei verschiedenen Mehlsorten gebacken. Bezüglich der Rezeptur für Roggensauer wird auf Beispiel 3 verwiesen. Eingesetzt wurden Weizenmehl zu 40%, Roggenmehl zu 40% und Hafermehl zu 20% bezogen auf die Gesamtmehlmenge. Die TG-Dosagen beziehen sich auf 100 kg Mehl.

Es wurde die folgende Rezeptur verwendet: (Vergleichsrezeptur)

| | |
|---|---|
| 40 kg | Weizenmehl Typ 550 |
| 40 kg | Roggenmehl Typ 1150 |
| 20 kg | Hafermehl |
| 2,5 kg | Salz |
| 3 kg | Hefe |
| ges. Roggenmehl wurde versäuert | |

Es wurden die folgenden Ergebnisse erhalten:

**Tabelle 13**

| **Enzymdosage** | **Blindwert** | **300 TG** | **600 TG** | **900 TG** |
|---|---|---|---|---|
| Backvolumen | 100% | 103% | 104% | 104% |
| Teigeigenschaften | zu weichfließend, klebrig | weich klebrig | etw.-min. weich, etw. klebrig | min. weich, min. klebrig |
| Brotform | flach | flach | etw. flach | min. flach |
| | | | | |

| **Enzymdosage** | **1200 TG** | **1500 TG** | **1800 TG** | **2100 TG** |
|---|---|---|---|---|
| Backvolumen | 106% | 105% | 105% | 106% |
| Teigeigenschaften | min. weich, min. klebrig | min. weich, min. klebrig | min. weich, min. klebrig | min. weich, min. klebrig |
| Brotform | min. flach | min. flach | min. flach | min. flach |

Es wurden ferner Brote aus vier verschiedenen Mehlsorten gebacken. Eingesetzt wurden Weizenmehl zu 50%, Hafermehl zu 30%, Maismehl zu 10% und Kartoffelmehl zu 10% bezogen auf die Gesamtmehlmenge. Die TG-Dosagen beziehen sich auf 100 kg Mehl. Bezüglich der Rezeptur für Roggensauer wird auf Beispiel 3 verwiesen.

Es wurde die folgende Rezeptur verwendet:

| | |
|---|---|
| 50 kg | Weizenmehl Typ 550 |
| 30 kg | Hafermehl |
| 10 kg | Maismehl |
| 10 kg | Kartoffelmehl |
| 2,5 kg | Salz |
| 3 kg | Hefe |
| 2 kg | Teigsäuerungsmittel (organische Säuren) |

Es wurden die folgenden Ergebnisse erhalten:

**Tabelle 14**

| **Enzymdosage** | **Blindwert** | **300 TG** | **600 TG** | **900 TG** |
|---|---|---|---|---|
| Backvolumen | 100% | 104% | 106% | 106% |
| Teigeigenschaften | zu weich, klebrig | weich klebrig | etw. weich, etw. klebrig | min. weich, min. klebrig |
| Brotform | flach | flach | etw. flach | etw. flach |
| | | | | |

| **Enzymdosage** | **1200 TG** | **1500 TG** | **1800 TG** | **2100 TG** |
|---|---|---|---|---|
| Backvolumen | 107% | 106% | 106% | 107% |
| Teigeigenschaften | min. weich, min. klebrig | min. weich, min. klebrig | min. weich, min. klebrig | min. weich, min. klebrig |
| Brotform | min. flach | min. flach | min. flach | min. flach - normal |

Aus den vorstehenden Ergebnissen geht hervor, daß auch bei Mehlmischungen mit mehr als zwei Mehlkomponenten die Transglutaminase eine deutliche Verbesserung der Teig- und Gebäckeigenschaften bewirkt. Besonders hervorzuheben ist dabei die Reduzierung der Teigklebrigkeit und die Erhöhung der Teigviskosität. Erfreulich stellen sich ebenfalls die erreichten Brotvolumina dar. Diese sind deutlich höher als die des Blindwerts. Durch die verbesserten Teigeigenschaften, Brotvolumina und Brotform läßt sich auch aus Spezialmehlen ein verkaufsfähiges Produkt herstellen.

## Patentansprüche

1. Verwendung eines Enzympräparats mit Transglutaminaseaktivität zusammen mit üblichen Backhilfsmitteln zur Herstellung von Backwaren, bei denen der Mehlanteil einen Weizenanteil von 1-50 Gew.-% und als Rest ein oder mehrere Nicht-Weizen-Mehl(e) ausgewählt aus Roggenmehl, Hafermehl, Maismehl und Kartoffelmehl umfasst, wobei die Transglutaminase in einer Dosierung von 5 bis 5000 TGU pro 100 kg Mehl verwendet wird und wobei das Enzympräparat zusätzlich eine Pilzxylanase in einer Dosierung von 4000 bis 6000 XylH bzw. eine Bakterienxylanase in einer Dosierung von 600 - 1000 XylH umfasst, wenn das Nicht-Weizen-Mehl Roggenmehl ist.

2. Verwendung nach Anspruch 1, **dadurch gekennzeichnet, daß** der Weizenanteil im Mehlanteil 10-50 Gew.-% beträgt.

3. Verwendung nach Anspruch 1 oder 2, **dadurch gekennzeichnet, dass** das Backhilfsmittel ein oder mehrere Enzym(e), ausgewählt aus Amylasen, Xylanasen, Pentosanasen, Hemicellulasen, Cellulasen, Endoglucanasen, β-Glucanasen, Phospholipasen, Lysophospholipasen, Phytasen, Phosphatasen, Lipasen, Lipoxygenasen, Oxidasen und Peroxidasen umfasst.

4. Verwendung nach einem der Ansprüche 1 bis 3, **dadurch gekennzeichnet, dass** das Backhilfsmittel eine organische Säure, einen getrockneten Sauerteig, einen Frischsauerteig oder ein Gemisch davon und Hefe umfasst.

5. Verwendung nach einem der Ansprüche 1 bis 4, **dadurch gekennzeichnet, dass** die Transglutaminase in einer Dosierung von 100 bis 2000 TGU pro 100 kg Mehl verwendet wird.

6. Verfahren zur Herstellung von Backwaren, bei denen der Mehlanteil einen Weizenanteil von 1-50 Gew.-% und als Rest ein oder mehrere Nicht-Weizen-Mehl(e) ausgewählt aus Roggenmehl, Hafermehl, Maismehl und Kartoffelmehl umfasst, **dadurch gekennzeichnet, dass** ein Enzympräparat mit Transglutaminaseaktivität zusammen mit üblichen Backhilfsmitteln verwendet wird, dass die Transglutaminase in einer Dosierung von 5 bis 5000 TGU pro 100 kg Mehl verwendet wird und dass das Enzympräparat zusätzlich eine Pilzxylanase in einer Dosierung von 4000 bis 6000 XylH bzw. eine Bakterienxylanase in einer Dosierung von 600 - 1000 XylH umfasst, wenn das Nicht-Weizen-Mehl Roggenmehl ist.

7. Verfahren nach Anspruch 6, **dadurch gekennzeichnet, dass** bei den Backwaren der Weizenanteil im Mehlanteil 10-50 Gew.-% beträgt.

8. Verfahren nach Anspruch 6 oder 7, **dadurch gekennzeichnet, dass** das Backhilfsmittel ein oder mehrere Enzym(e), ausgewählt aus Amylasen, Xylanasen, Pentosanasen, Hemicellulasen, Cellulasen, Endoglucanasen, β-Glucanasen, Phospholipasen, Lysophospholipasen, Phytasen, Phosphatasen, Lipasen, Lipoxygenasen, Oxidasen und Peroxidasen umfasst.

9. Verfahren nach einem der Ansprüche 6 bis 8, **dadurch gekennzeichnet, dass** das Backhilfsmittel eine organische Säure, einen getrockneten Sauerteig, einen Frischsauerteig oder ein Gemisch davon und Hefe umfasst.

10. Verfahren nach einem der Ansprüche 6 bis 9, **dadurch gekennzeichnet, dass** 100 bis 2000 TGU pro 100 kg Mehl eingesetzt werden.

## Claims

1. A use of an enzyme preparation with transglutaminase activity, together with usual baking aids for the manufacture of baked goods in which the flour component comprises a proportion of wheat of 1-50 % by weight and as a remainder one or more non-wheat flour(s) selected from rye flour, oat flour, maize flour and potato flour, wherein the transglutaminase is used in a dosage of 5 to 5000 TGU per 100 kg flour and wherein the enzyme preparation additionally comprises a fungal xylanase in a dosage of 4000 to 6000 XylH or a bacterial xylanase in a dosage of 600 - 1000 XylH if the non-wheat flour is rye flour.

2. The use according to claim 1 **characterised in that** the wheat proportion in the flour component amounts to 10-50 % by weight.

3. The use according to claim 1 or claim 2, **characterised in that** the baking aid comprises one or more enzyme(s) selected from amylases, xylanases, pentosanases, hemicellulases, cellulases, endoglucanases, β-glucanases, phospholipases, lysophospholipases, phytases, phosphatases, lipases, lipoxygenases, oxidases, and peroxidases.

4. The use according to any one of the claims 1 to 3, **characterised in that** the baking aid comprises an organic acid, a dried sour dough, a fresh sour dough or a mixture thereof and yeast.

5. The use according to any one of the claims 1 to 4, **characterised in that** the transglutaminase is used in a dosage of 100 to 2000 TGU per 100 kg flour.

6. A method for the manufacture of baked goods in which the flour component comprises a proportion of wheat of 1-50 % by weight and as a remainder one or more non-wheat flour(s) selected from rye flour, oat flour, maize flour and potato flour **characterised in that** an enzyme preparation with transglutaminase activity is used together with usual baking aids, **in that** the transglutaminase is used in a dosage of 5 to 5000 TGU per 100 kg flour and **in that** the enzyme preparation additionally comprises a fungal xylanase in a dosage of 4000 to 6000 XylH or a bacterial xylanase in a dosage of 600 - 1000 XylH if the non-wheat flour is rye flour.

7. The method according to claim 6, **characterised in that** in the baked goods the wheat proportion in the flour component amounts to 10-50 % by weight.

8. The method according to claim 6 or claim 7, **characterised in that** the baking aid comprises one or more enzyme(s) selected from amylases, xylanases, pentosanases, hemicellulases, cellulases, endoglucanases, β-glucanases, phospholipases, lysophospholipases, phytases, phosphatases, lipases, lipoxygenases, oxidases, and peroxidases.

9. The method according to any one of the claims 6 to 8, **characterised in that** the baking aid comprises an organic acid, a dried sour dough, a fresh sour dough or a mixture thereof and yeast.

10. The method according to any one of the claims 6 to 9, **characterised in that** 100 to 2000 TGU is used per 100 kg flour.

## Revendications

1. Utilisation d'une préparation d'enzymes avec activité de transglutaminase en association avec des adjuvants de boulangerie habituels pour la fabrication de pains et pâtisseries, dans laquelle le contenu en farine comporte une teneur en froment de 1 à 50 % en poids, et pour le reste une ou plusieurs farines non de froment choisies parmi les farines de seigle, d'avoine, de maïs et de pomme de terre, où la transglutaminase est utilisée avec un dosage de 5 à 5000 TGU pour 100 kg de farine, et où la préparation d'enzymes comprend en plus une xylanase fongique dans un dosage de 4000 à 6000 XylH ou respectivement une xylanase bactérienne dans un dosage de 600 à 1000 XylH si la farine non de froment est une farine de seigle.

2. Utilisation selon la revendication 1, **caractérisée en ce que** la teneur en froment dans la teneur en farine est de 10 à 50 % en poids.

3. Utilisation selon la revendication 1 ou 2, **caractérisée en ce que** l'adjuvant de boulangerie comprend une ou plusieurs enzymes choisies parmi les amylases, les xylanases, les pentosanases, les hémicellulases, les cellulases, les endoglucanases, les β-glucanases, les phospholipases, les lysophospholipases, les phytases, les phosphatases, les lipases, les lipoxygénases, les oxydases et les peroxydases.

4. Utilisation selon une des revendications 1 à 3, **caractérisée en ce que** l'adjuvant de boulangerie comprend un acide organique, un levain séché, un levain frais ou un mélange de l'un de ces produits avec une levure.

5. Utilisation selon une des revendications 1 à 4, **caractérisée en ce que** la transglutaminase est utilisée avec un dosage de 100 à 2000 TGU pour 100 kg de farine.

6. Procédé de fabrication de pains et pâtisseries dans lequel la teneur en farine comprend une teneur en froment de 1 à 50 % en poids, et pour le reste une ou plusieurs farines non de froment choisies parmi les farines de seigle, d'avoine, de maïs et de pomme de terre, **caractérisée en ce qu'**une préparation d'enzymes avec activité de transglutaminase est utilisée en association avec des adjuvants de boulangerie habituels, **en ce que** la transglutaminase est utilisée dans un dosage de 5 à 5000 TGU pour 100 kg de farine, et **en ce que** la préparation d'enzymes comprend en plus une xylanase fongique dans un dosage de 4000 à 6000 XylH ou respectivement une xylanase bactérienne avec un dosage de 600 à 1000 XylH si la farine non de froment est une farine de seigle.

7. Procédé selon la revendication 6, **caractérisée en ce que**, dans les pains et pâtisseries, la teneur en farine de froment dans la teneur en farine est de 10 à 50 % en poids.

8. Procédé selon la revendication 6 ou 7, **caractérisée en ce que** l'adjuvant de boulangerie comprend une ou plusieurs enzymes choisies parmi les amylases, les xylanases, les pentosanases, les hémicellulases, les cellulases, les endoglucanases, les β-glucanases, les phospholipases, les lysophospholipases, les phytases, les phosphatases, les lipases, les lipoxygénases, les oxydases et les peroxydases.

9. Procédé selon la revendication 6 à 8, **caractérisée en ce que** l'adjuvant de boulangerie comprend un acide organique, un levain séché, un levain frais ou un mélange de l'un de ces produits avec une levure.

10. Procédé selon la revendication 6 à 9, **caractérisée en ce que** 100 à 2000 TGU pour 100 kg de farine sont ajoutés.
